# EUROPEAN PATENT APPLICATION

(11) **EP 0 798 793 A2**
(43) Date of publication of application: **01.10.1997**
(21) Application number: 96112176.1
(22) Date of filing: 27.07.1996
(51) Int. Cl.: H01M 2/12, H01G 9/12

(54) **Battery equipped with diaphragm safety relief valve**

(30) Priority: 30.03.1996 KR 9609447
(71) Applicant: DAEWOO ELECTRONICS CO., LTD, Seoul (KR)
(72) Inventor: Jeong, Jae-Ho, Seoul (KR)
(74) Representative: Weitzel, Wolfgang, Dr.-Ing.

(57) **Abstract**

An explosion resistant structure for a lithium battery is disclosed which is composed of a top cap (10), an explosion resistant plate (22) and sealing film (24). The top cap is formed of a circular flat portion (12) and a projected portion (14) projected from the central portion of the flat portion and has a plurality of cut blades (18) which are provided at the side wall of the projected portion by cutting the top cap V-shaped and folding the cut portion inwardly. The explosion resistant plate is positioned adjacent to the cut blades but not to contact with the cut blades and has its peripheral edges fixed to expand upwardly upon rising of inner pressure of the battery. The sealing film is coated on the lower surface of the explosion resistant plate and keeps the hermetic state of the battery by fusion.

## Description

### BACKGROUND OF THE INVENTION

### 1. Field of the invention

The present invention relates to an explosion resistant structure of a lithium battery, and more particularly to an explosion resistant structure of a lithium battery constructed to rupture under low pressure if being on the rise of inner pressure of the battery.

### 2. Description of the Prior Art

Recently, a lithium battery having a negative electrode made of lithium or lithium alloy has been developed and widely utilized in various electronic devices.

However, because metal lithium has high reactivity, the temperature and pressure of the battery are apt to rise by moisture or active impurities contained in the battery.

Moreover, according to recent developments, there are increasing cases of wrong use of the battery of this kind such that the battery, despite the fact that the battery is a primary battery, is erroneously subjected to charging or forced discharging by an external power source. An example of forced discharging, which occurs many times, is that one or more old batteries, which are already used and the discharging capacity thereof is depleted or small, are connected with one or more new batteries of which the discharging capacity is plentiful. In this case, if the battery of which the discharging capacity is depleted is forced to be discharged, the battery is loaded with a minus voltage by the current supplied from the other healthy battery.

If such error occurs in a lithium battery, the battery is apt to generate heat due to an internal short circuit and there are some cases of explosion of the battery.

Besides, when the lithium batteries are subjected to work using relatively large current, the batteries generate a lot of heat and the temperature of the battery become higher at the central portion, and an insulation layer between positive and negative electrode plates is molten, whereby an internal short circuit occurs and a further large amount of current flows there with the generation of further heat. Accordingly, the lithium and lithium alloy become molten and the battery burns or explodes.

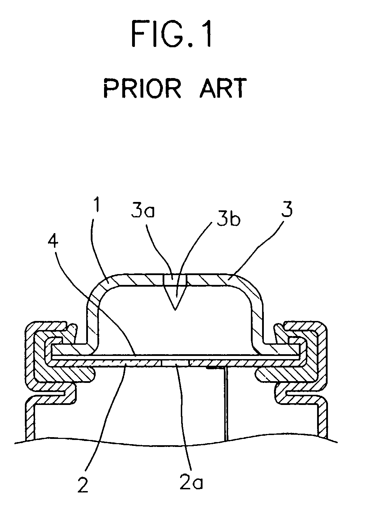

Fig. 1 illustrates a conventional explosion resistant structure to prevent such explosion of the battery. The conventional explosion resistant structure includes a top cap 1 having a positive terminal 3 and a sealing plate 2 disposed to lay a peripheral edge of top cap 1 thereon through an explosion resistant plate 4 and having a hole 2a at the central portion thereof. A vent hole 3a and a cut blade 3b are provided at the central portion of top cap 1. When the inner pressure of the battery rises, explosion resistant plate 4 is expanded upwardly to be broken by engagement with cut blade 3b, thereby exhausting the inner gas outward through vent hole 3a. Accordingly, the inner pressure of the battery falls and the explosion thereof is prevented.

However, in the conventional explosion resistant structure for a lithium battery, cut blade 3b is located relatively apart from explosion resistant plate 4, so that explosion resistant plate 4 is broken after a delay at relatively high pressure. When the battery is sealed incompletely, or the inner temperature of the battery drastically rises, the battery is apt to explode by delayed rupture of explosion resistant plate 4 or non-rupture thereof.

Besides, because only one vent hole 3a is provided at the central portion of top cap 1, there is further problem such that gas and flame, which are generated in the battery, burst out without dispersion and attain a long distance.

### SUMMARY OF THE INVENTION

The present invention is devised to solve the foregoing problems. An object of the present invention is to provide an explosion resistant structure of a lithium battery constructed to rupture under low pressure if being on the rise of inner pressure of the battery and to have a high degree of safety.

In order to accomplish the above object of the present invention, there is provided an explosion resistant structure for a lithium battery comprising:
a negative casing having a bottom and a narrow portion provided at an upper portion thereof;
a positive top cap of a hat shape being formed of a circular flat portion and a cylindrical projected portion projected from a central portion of the flat portion upwardly and disposed coaxially with the flat portion, having a plurality of cut blades and a plurality of vent holes, and being fixed between the narrow portion of the casing and folded upper edge thereof to be exposed to the outside of the battery, the cut blades being provided by cutting V-shaped from the side wall of the projected portion and folding the cut portion inwardly, and the vent holes being provided by the cutting and folding;
an explosion resistant plate being made of metal in a round disk shape, having its outer peripheral edge fixed to expand upwardly upon rising of inner pressure of the battery, and disposed below the top cap; and
a sealing film coated on the lower surface of the explosion resistant plate for sealing the casing hermetically by fusion to the inner surface of the casing.

The cut blades may be provided by cutting the top cap V-shaped from the side wall of the projected portion to the flat portion.

Preferably, the cut blades are provided by cutting the top cap V-shaped from the side wall of the projected portion to one third of the radial length of the flat portion, starting from the boundary of the flat and projected portions, the radial length being a length between the boundary and the circumference of the flat portion.

Alternatively, the cut blades may be provided by cutting the side wall of the projected portion V-shaped.

For example, the sealing film is made of polyethylene film, and preferably, the sealing film has a thickness of 10 to 30 micrometers.

Preferably, the explosion resistant plate has a thickness of 20 to 30 micrometers.

The cut blades may be two cut blades disposed opposite to each other.

### BRIEF DESCRIPTION OF THE DRAWINGS

The above object and other advantages of the present invention will become more apparent by describing in detail preferred embodiments thereof with reference to the attached drawings in which:
FIG. 1 is a partly vertical sectional view showing the upper structure of a conventional lithium battery;
FIG. 2 is a perspective view showing an example of a top cap of an explosion resistant structure for a lithium battery according to the present invention;
FIG. 3 is a partly vertical sectional view showing an explosion resistant structure for a lithium battery according to the present invention;
FIG. 4 is a partly vertical sectional view showing the explosion resistant structure shown in FIG. 3 after an explosion resistant plate is ruptured; and
FIG. 5 is a perspective view showing another example of a top cap of an explosion resistant structure for a lithium battery according to the present invention.

### DETAILED DESCRIPTION OF THE PREFERRED EMBODIMENT

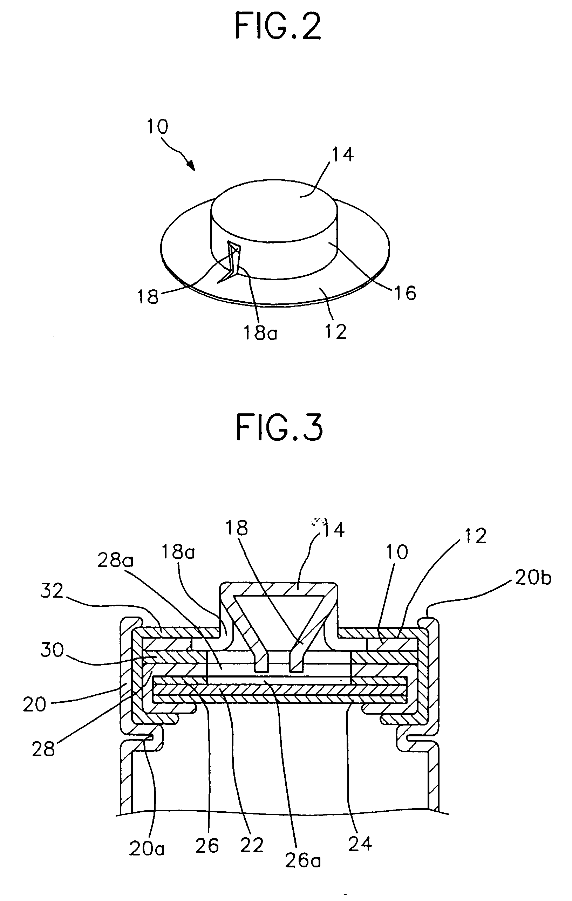

The preferred embodiment of an explosion resistant structure according to the present invention will be described in detail with reference to FIGS. 2 to 4.

An example of a top cap 10 is shown in FIG. 2. Top cap 10 is shaped in a hat shape by press forming. Top cap 10 is formed of a circular flat portion 12 and a projected portion 14 projected from the central portion of flat portion 12 upwardly and disposed coaxially with flat portion 12. Projected portion 14 is shaped in a cylindrical shape and preferably has two V-shaped cut blades 18 at its side wall 16 which are disposed opposite to each other. Cut blades 18 are projected slantingly in an inward direction of top cap 10. Cut blades 18 are formed by cutting top cap 10 V-shaped and folding the cut portion into the inside of top cap 10. Two vent holes 18a also are formed at top cap 10 by making up cut blades 18. In this example, top cap 10 is cut V-shaped from side wall 16 of projected portion 14 to flat portion 12 and preferably, to one third of the radial length of flat portion 12, starting from the boundary of flat and projected portions 12 and 14, wherein the radial length is a length between the boundary thereof and the circumference of flat portion 12.

With reference to FIG. 3, reference numeral 20 denotes a cylindrical casing with a bottom (not shown), into which an electrode body (not shown) is installed. Casing 20 has a narrow portion as indicated by 20a.

An explosion resistant plate 22 is made of metal plate in a round disk shape with its lower surface on which a polymer film 24 is coated. Polymer film 24 may be made of polyethylene. Preferably, explosion resistant plate 22 has a thickness of 20 to 30 micrometers, and polymer film 24 of polyethylene has a thickness of 10 to 30 micrometers. A ring plate 26 serves for shock-absorbing and is made of plastic in a round disk shape with its central portion opened by a hole 26a. Ring plate 26 is laid on the upper uncoated surface of explosion resistant plate 22 with its outer peripheral edge portion clamped by a cover 28. Cover 28 has a hollow cylindrical shape and the upper and lower edges of cover 28 are folded inwardly to have the central portion of cover 28 opened by a hole 28a. Explosion resistant plate 22 and ring plate 26 are fitted into cover 28 and clamped between the upper and lower edges folded.

Polymer film 24 is fused to, at about 200°C, the inner surface of cover 28 to seal casing 20, so that rising pressure within the battery does not leak through a gap between cover 28 and explosion resistant plate 22 but is directly applied to explosion resistant plate 22, thereby rupturing explosion resistant plate 22 at a low inner pressure.

A positive temperature coefficient (hereinafter simply referred to as "PTC") element 30 is made of metal which has its electric resistance proportional to the temperature and is provided to have very high resistance over 80°C. When the inner temperature of the battery is over 80°C, PTC element 30 has very high resistance and serves as an insulator for opening the inner electric circuit of the battery. PTC element 30 has a round disk shape opened by a hole 30a at its central portion. Within the battery, PTC element 30 is laid on cover 28.

As shown in FIG. 2, top cap 10 is laid on PTC element 30. Top cap 10, PTC element 30 and cover 28 including ring plate 26 and explosion resistant plate 22 are fitted within casing 10 in this order and are clamped between narrow portion 20a and inwardly folded upper edge portion 20b through a gasket 32.

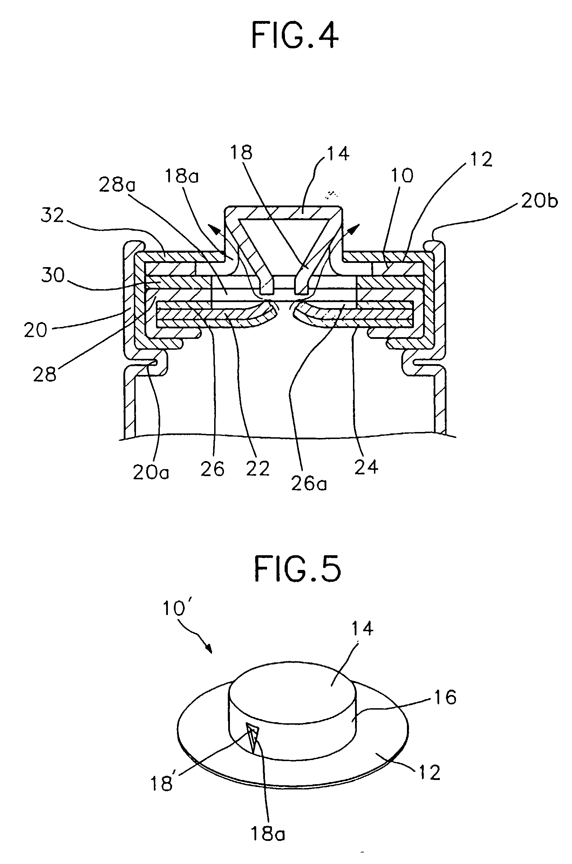

When the inner pressure of the battery constructed as described above rises, explosion resistant plate 22 expands upwardly. At this time, because the battery keeps its hermetic state by fusing polymer film 24 to cover 28, explosion resistant plate 22 sensitively responds to pressure. When explosion resistant plate 22 further expands, explosion resistant plate 22 is broken by engagement with cut blades 18 (see FIG. 4.) so as to exhaust the inner gas in the battery outward through vent holes 18a, thereby preventing explosion of the battery.

In FIG. 5, another example of top cap according to the present invention is shown as indicated by 10'. In this example, in order to form cut blades 18', side wall 16 of projected portion 14 is cut V-shaped. At this time, the cut end is not beyond the boundary of flat and projected portion 12 and 14.

In the explosion resistant structure for a lithium battery according to the present invention, the sharp end of cut blades 18 is positioned relatively adjacent to explosion resistant plate 22, and the hermetic state of the battery is reliably kept. As the result, explosion resistant plate 22 is broken without delay at relatively low inner pressure, thereby reliably preventing explosion of the battery.

Besides, because a plurality of vent holes 18a are formed at side wall 16 of top cap 10, gas and flame, which are generated in the battery, burst out dispersively to have a high degree of safety.

While the present invention has been particularly shown and described with reference to particular embodiment thereof, it will be understood by those skilled in the art that various changes in form and details may be effected therein without departing from the spirit and scope of the invention as defined by the appended claims.

## Claims

1. An explosion resistant structure for a lithium battery comprising:
a negative casing having a bottom and a narrow portion provided at an upper portion thereof;
a positive top cap of a hat shape being formed of a circular flat portion and a cylindrical projected portion projected from a central portion of said flat portion upwardly and disposed coaxially with said flat portion, having a plurality of cut blades and a plurality of vent holes, and being fixed between said narrow portion of said casing and folded upper edge thereof to be exposed to the outside of said battery, said cut blades being provided by cutting V-shaped from the side wall of said projected portion and folding the cut portion inwardly, and said vent holes being provided by the cutting and folding;
an explosion resistant plate being made of metal in a round disk shape, having its outer peripheral edge fixed to expand upwardly upon rising of inner pressure of the battery, and disposed below said top cap; and
a sealing film coated on the lower surface of said explosion resistant plate for sealing said casing hermetically by fusion to the inner surface of said casing.

2. The explosion resistant structure as claimed in claim 1, wherein said cut blades are provided by cutting said top cap V-shaped from said side wall of said projected portion to said flat portion.

3. The explosion resistant structure as claimed in claim 2, wherein said cut blades are provided by cutting said top cap V-shaped from said side wall of said projected portion to one third of the radial length of said flat portion, starting from the boundary of said flat and projected portions, the radial length being a length between said boundary and the circumference of said flat portion.

4. The explosion resistant structure as claimed in claim 1, wherein said cut blades are provided by cutting said side wall of said projected portion V-shaped.

5. The explosion resistant structure as claimed in claim 1, wherein said sealing film is made of polyethylene film.

6. The explosion resistant structure as claimed in claim 5, wherein said sealing film has a thickness of 10 to 30 micrometers.

7. The explosion resistant structure as claimed in claim 6, wherein said explosion resistant plate has a thickness of 20 to 30 micrometers.

8. The explosion resistant structure as claimed in claim 1, wherein said cut blades are two cut blades disposed opposite to each other.

9. An explosion resistant structure for a lithium battery comprising:
a negative casing having a bottom and a narrow portion provided at an upper portion thereof;
a positive top cap of a hat shape being formed of a circular flat portion and a cylindrical projected portion projected from a central portion of said flat portion upwardly and disposed coaxially with said flat portion, having a plurality of cut blades and a plurality of vent holes, and being fixed between said narrow portion of said casing and folded upper edge thereof to be exposed to the outside of said battery, said cut blades being provided by cutting V-shaped from the side wall of said projected portion and folding the cut portion inwardly, and said vent holes being provided by the cutting and folding;
an explosion resistant plate being made of metal in a round disk shape, having its outer peripheral edge fixed to expand upwardly upon rising of inner pressure of the battery, and disposed below said top cap; and
a sealing film coated on the lower surface of said explosion resistant plate for sealing said casing hermetically by fusion to the inner surface of said casing,
wherein said cut blades are provided by cutting said top cap V-shaped from said side wall of said projected portion to said fiat portion,
said cut blades are provided by cutting said top cap V-shaped from said side wall of said projected portion to one third of the radial length of said flat portion, starting from the boundary of said flat and projected portions, the radial length being a length between said boundary and the circumference of said flat portion,
said sealing film is made of polyethylene film having a thickness of 10 to 30 micrometers,
said explosion resistant plate has a thickness of 20 to 30 micrometers, and
said cut blades are two cut blades disposed opposite to each other.
